(19) Europäisches Patentamt
European Patent Office
Office européen des brevets

(11) Veröffentlichungsnummer: **0 374 633 A2**

(12) # EUROPÄISCHE PATENTANMELDUNG

(21) Anmeldenummer: **89122667.2**

(22) Anmeldetag: **08.12.89**

(51) Int. Cl.$^5$: **C08B 11/20, C08B 11/12, C08B 31/12, C08B 37/00**

(30) Priorität: **21.12.88 DE 3842947**

(43) Veröffentlichungstag der Anmeldung: **27.06.90 Patentblatt 90/26**

(84) Benannte Vertragsstaaten: **DE FR GB IT NL SE**

(71) Anmelder: **Wolff Walsrode Aktiengesellschaft
Postfach
D-3030 Walsrode 1(DE)**

(72) Erfinder: **Buysch, Hans-Josef, Dr.
Brandenburger Strasse 28
D-4150 Krefeld(DE)**
Erfinder: **Szablikowski, Klaus, Dr.
Claudiusstrasse 5
D-3030 Walasrode(DE)**
Erfinder: **Wilke, Michaela, Dr.
Ahornweg 9
D-3043 Schneverdingen(DE)**
Erfinder: **Blumenberg, Klaus, Dr.
Lisztstrasse 5
D-3030 Walsrode(DE)**
Erfinder: **Breckwoldt, Jörn, Dr.
Rostocker Strasse 55
D-2720 Rothenburg(DE)**

(74) Vertreter: **Zobel, Manfred, Dr. et al
c/o BAYER AG Konzernverwaltung RP
Patente Konzern
D-5090 Leverkusen 1 Bayerwerk(DE)**

(54) **Verfahren zur Herstellung von Estern der Carboxyalkylpolysaccharide.**

(57) Ester der Carboxyalkylpolysaccharide werden in heterogener Phase hergestellt durch Umsetzung von Alkalisalzen der Carboxyalkylpolysaccharide mit Alkylierungsmitteln RX in Gegenwart von Wasser.

EP 0 374 633 A2

Xerox Copy Centre

## Verfahren zur Herstellung von Estern der Carboxyalkylpolysaccharide

Die vorliegende Erfindung betrifft ein Verfahren zur Herstellung von Estern der Carboxyalkylpolysaccharide.

Es ist aus DE-PS 957 938 und EP-A-104 467 bekannt, Ester der Carboxymethylcellulose (CMC) herzustellen durch Umsetzen des Na-Salzes der CMC in einem großen Überschuß an aliphatischen Alkoholen in Gegenwart von solchen Mengen an starken Säuren, daß nach Freisetzen der CMC aus dem Alkalisalz genügend Säure übrigbleibt, um die Veresterung zu katalysieren. Dieses Verfahren ergibt zwar gute Ausbeuten an Ester, aber man erhält immer einen deutlichen Abbau der Cellulose in dem aciden Milieu, da mit dem Alkohol leicht eine säurekatalysierte Umacetalisierung und mit Wasser eine hydrolytische Spaltung der Glykosidbindung ablaufen kann. Außerdem ist eine völlige Überführung des Na-Salzes der CMC, wie es bei der Synthese der CMC unmittelbar entsteht, in die freie Säure erforderlich, auch wenn nur ein Teil der CMC verestert werden soll, wobei die äquivalente Menge Salz anfällt Man muß dann die überschüssige Säure sehr sorgfältig entfernen, um weiteren Abbau zu verhindern.

Weitere Möglichkeiten, Ester von Carboxyalkylpolysacchariden herzustellen, bestehen in der Umsetzung mit aktivierten Alkylierungsmitteln wie Br-$CH_2$-COOEt oder $BrCH_2CN$.

Beispielsweise wird Carboxymethylcellulose-Natriumsalz zuerst mit Salzsäure in die Säure und dann mit Triethylamin in das Ammoniumsalz umgewandelt und dieses dann in einer Lösung aus Dimethylacetamid und Methanol in Gegenwart eines Quartärsalzes mit den o.a. aktivierten Alkylierungsmitteln verestert. Der Umsatz beträgt max 76 % (J. Appl. Polym. Sci., 32 (6) 5657-9 (1986) und JA-60197701).

Andere aktivierte Alkylierungsmittel, nämlich $\alpha$-Brom-$\alpha$-ethoxyessigester, werden im Zweiphasensystem Wasser/Methylenchlorid in Gegenwart eines Phasentransferkatalysators mit Natriumcarboxyalkylcellulose zur Reaktion gebracht und liefern maximal 65 % Umsatz an Carboxylat. Dafür sind lange Reaktionszeiten erforderlich (Angew. Makromol. Chemie 126, 59-65 (1984)). Nach dieser Publikation können weniger reaktive Alkylhalogenide selbst unter den hier vorgeschlagenen günstigen Bedingungen nicht mit der Natriumcarboxyalkylcellulose zur Reaktion gebracht werden.

In der vorliegenden Anmeldung genannte Alkylierungsmittel der Formel II sind schon für die Umsetzung mit Alkalisalzen der Carboxymethylcellulose eingesetzt worden. Jedoch wurde in diesen Fällen immer in Gegenwart starker Alkalien gearbeitet, wobei keine Veresterung, sondern eine zusätzliche Veretherung noch freier OH- Gruppen der Cellulose erfolgte (USP 24 76 331, Jpn. Kohai Tokhyo Koho JP-A-81 161 401; CA 96, 144800r, Jpn. Kohai Tokhyo Koho JP-A-80 90 501; CA 93, 241469k).

Aufgabe der vorliegenden Erfindung ist es, ein Verfahren zur Verfügung zu stellen, nach dem man flexibel mit einfachen und leicht zugänglichen Alkylierungsmitteln Alkalisalze von Carboxyalkylpolysacchariden in suspendierter Form in gängigen Suspendierungsmitteln in Abwesenheit von starken Alkalien und von starken Säuren, d.h. ohne Molgewichtsabbau, in die Ester der Carboxyalkylpolysaccharide entsprechend gewünschten Umsetzungsgraden überführen kann.

Gegenstand der Erfindung ist ein Verfahren zur Herstellung von Estern III der Carboxyalkylpolysaccharide durch Umsetzung von Alkalisalzen I der Carboxypolysaccharide mit einem Alkylierungsmittel II, dadurch gekennzeichnet, daß die Umsetzung durchgeführt wird in heterogener Phase in einem Suspendiermittel in Anwesenheit von Wasser aber in Abwesenheit von zumindest wesentlichen Mengen einer starken Säure bzw einer starken Base, wobei das Alkylierungsmittel II folgender Formel entspricht

RX (II)

worin bedeuten

X ein Anion bildender Rest, bevorzugt Cl, Br, J, $OSO_3CH_3$ $OP(OR)_2$, $OSO_2CF_3$, $OSO_2CH_3$,

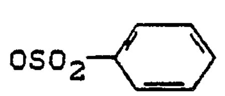,

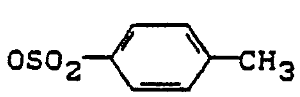,

$OSO_3C_2H_5$ R = $C_{1-12}$-Alkyl (gegebenenfalls OH subst.), Aralkyl, mit 7-12 C-Atomen, welches im aromatischen Kern substituiert ist.

In einer bevorzugten Ausführungsform wird die Umsetzung in Anwesenheit von wenigstens 2 Gew.-% Wasser bezogen auf das Alkalisalz I durchgeführt. Unter starken Säuren werden starke Mineralsäuren und

allgemein Säuren mit einem pKA-Wert < als 3,0 insbesondere < als 2,0 verstanden. Unter starken Basen werden insbesondere Alkali-und Erdalkalihydroxide und allgemein Basen mit einem pKB-Wert < als 2,5 insbesondere als < 1,5 verstanden.

Vorzugsweise eingesetzte Alkalisalze I von Carboxyalkylpolysacchariden weisen Einheiten der folgenden allgemeinen Formel I auf

$Sacch.[O-(CH_2)_n-COOM]_m$ I

worin bedeuten

M Alkalikation, insbesondere Natrium

n 1 oder 2

m 0,2 bis 3

Sacch.-O-Saccharideinheit eines Polysaccharides.

Besonders bevorzugte erfindungsgemäß erhältliche Ester III entsprechen folgender Formel

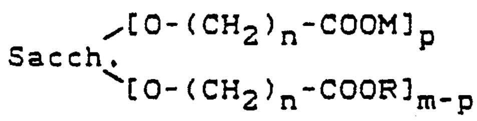

III

worin

Sacch.-O-, M, R, n und m die obengenannte Bedeutungen haben und p = 0 bis 2,8 sein kann, wobei der Ausdruck m-p nicht negativ oder kleiner als 0,1 ist, also 0,1 bis 3,0, vorzugsweise 0,2 bis 2,8, besonders bevorzugt 0,3 bis 2,5, ganz besonders bevorzugt 0,3 bis 2,2.

In Verbindungen der Formel III können die in den mit "p" und "m-p" indizierten eckigen Klammern angegebenen Substituenten an der gleichen Saccharideinheit angebunden sein. Es ist aber auch möglich, daß einzelne Saccharideinheiten des Polysaccharides gar nicht substituiert sind oder nur einen dieser Substituenten tragen. Wesentlich ist, daß das durch die Indizierungen angegebene Verhältnis beider Substituenten im statistischen Mittel bezogen auf das gesamte Polysaccharid vorliegt.

In einer besonders bevorzugten Ausführungsform wird die Umsetzung bei einer Temperatur von 20 bis 130 °C geführt. In einer weiteren Ausführungsform wird die Umsetzung durchgeführt in Anwesenheit eines Katalysators, insbesondere eines stickstoff- oder phosphorhaltigen Katalysators.

Bevorzugte Carboxyalkylpolysaccharide für das erfindungsgemäße Verfahren sind solche, in denen die Polysaccharideinheit Glucose, Galactose, Mannose, Ribose, Fructose, Xylose, Rhamnose und Arabinose sein kann, also Polyglucosane wie Cellulose, die verschiedenen Derivate der Cellulose wie Methylcellulose, gemischte Ether der Cellulose, wie Methyl-hydroxyethyl-cellulose, Stärke, Dextrine, Glycogen, Polyfructosane wie Inulin, Graminin, Polymannosane, Polygalactosane, Heteropolysaccharide wie Hemicellulosen; Polyxylosane und Polyarabinosane. Sie werden hergestellt nach an sich bekannten Verfahren, beispielsweise durch Umsetzung von alkalisierten Polysacchariden mit Halogenessigsäure (Ullmann's Encyclopädie der technischen Chemie, 4. Auflage, Band 9, Seite 203 ff).

Bevorzugt sind Cellulose und ihre Ether, Stärke und Dextrine besonders bevorzugt Cellulose, Methylcellulose, Ethylcellulose, Hydroxyethylcellulose, Hydroxypropylcellulose und Stärke.

Bevorzugte Alkylierungsmittel II sind solche, in denen der Rest R Methyl, Ethyl, Isopropyl, Butyl, Isobutyl, Amyl, Hexyl, Cyclohexyl, Heptyl, Octyl, 2-Ethylhexyl, Nonyl, Dodecyl, ß-Hydroxyethyl, ß-Hydroxypropyl, ß,γ-Dihydroxypropyl, Benzyl, bevorzugt Methyl, Ethyl, Isopropyl, Benzyl, besonders bevorzugt Methyl und Ethyl und in denen der Rest ein Anion bildender Rest, bevorzugt Chlor, Brom, Iod, Sulfat, Mesylat, Tosylat, Benzolsulfonat, Phosphat, Trifluormesylat, besonders bevorzugt Cl, Br, $OSO_3C_2H_5$, $OSO_3CH_3$,

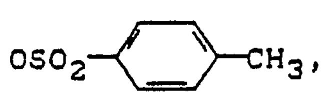

ganz besonders bevorzugt Cl, $OSO_3C_2H_5$, $OSO_3CH_3$.

Genannt seien beispielsweise Methylchlorid, Methylbromid, Methyliodid, Dimethylsulfat, Diethylsulfat, Trimethylphosphat, Methylmesylat, Methyltosylat, Ethylchlorid, Ethylbromid, Methyl-trifluormesylat, Benzylchlorid, Benzylbromid, Benzylmesylat, ß-Hydroxyethylchlorid, ß-Hydroxyethylbromid, ß-Hydroxypropylchlorid, ß,γ-Dihydroxypropylchlorid, Isopropylchlorid, Isopropylbromid.

Bevorzugte Suspendiermittel sind die o.a. Alkylierungsmittel, Kohlenwasserstoffe wie Pentan, Cyclohexan, Heptan, Isooctan, Petrolether, Isododecan, Toluol, Xylol, Benzol und Cumol, Halogenkohlenwasserstoffe wie Methylenchlorid, Chloroform, Dichlorethan, Trichlorethylen, Chlorbenzol, Dichlorbenzol und Brombenzol, Ether wie Dioxan, Diisopropylether, Dimethoxethan, Anisol, Ester wie Ethylacetat, Butylacetat, Propylpropionat, Ethylbenzoat7 Ethylbutyrat und Glykoldiacetat, Amide wie Dimethylformamid, Dimethylacetamid, Nitrile wie Acetonitril und Propionitril, Alkohole wie Methanol, Ethanol, Isopropanol, Butanol, Isobutanol, bevorzugt sind Kohlenwasserstoffe, Halogenkohlenwasserstoffe, Alkohole und die Alkylierungsmittel.

Bevorzugte quartäre Ammoniumverbindungen und Phosphoniumverbindungen, die als Katalysatoren eingesetzt werden können, sind bekannt als Angew. Chem. 89, 521-533 (1977), beispielsweise Trimethylbenzylammoniumchlorid, Tetramethylammoniumchlorid, Triethylbenzylammoniumchlorid, Tetraethylammoniumchlorid, Tetramethylammonium tosylat, Tetrabutylammoniumchlorid, Tris-(ß-hydroxyethyl)-benzylammoniumchlorid, Tris-(ß-hydroxypropyl)benzylammoniumchlorid, Tris-(ß-hydroxyethyl)-dodecylammoniumbromid, Diethyl-(ß-hydroxypropyl)-benzylammoniummesylat, Trimethyl-stearylammoniumchlorid, Tetrabutyl-ammoniumtosylat, Trimethyl-benzyl-phosphoniumchlorid, Tributyl-allyl-phosphoniumbromid, Tetrabutyl-phosphonium-chlorid, Diphenyl-methyl-benzyl-phosphonium-tosylat, Triphenyl-benzyl-phosphoniumbromid und Triphenyl-methyl-phosphoniumchlorid.

Der Einsatz solcher Katalysatoren ist an sich nicht erforderlich. Sie können jedoch in manchen Fällen die Reaktionszeit verkürzen oder bei ansonsten vorgegebenen Reaktionsbedingungen die Ausbeute steigern. Sie werden im allgemeinen in Mengen von 0,01 bis 100 Mol-%, bevorzugt 0,1 bis 50 Mol-%, besonders bevorzugt 0,5 bis 30 Mol-% bezogen auf die umzusetzenden Alkali-carboxyalkylpolysaccharide bevorzugt in wäßriger Lösung eingesetzt.

Das Molverhältnis von Carboxylat I zu Alkylierungsmittel II beträgt im allgemeinen je nach erstrebtem Veresterungsgrad zwischen 1:0,1 bis 1:20, vorzugsweise 1:0,2 bis 1:15, besonders bevorzugt 1:0,3 bis 1:10, ganz besonders bevorzugt 1:0,3 bis 1:4.

Die Reaktionstemperatur liegt zwischen im allgemeinen 20 bis 150 °C, vorzugsweise 30 bis 130 °C, besonders bevorzugt 45 bis 125 °C.

Bei Verwendung von gasförmigen Alkylierungsmitteln II wie Methylchlorid oder Ethylchlorid arbeitet man zweckmäßig in einem Autoklaven unter dem sich bei der gewählten Temperatur ausbildenden Eigendruck des Reaktionsgemisches, der etwa 1 und 50 bar, vorzugsweise 5 bis 40 bar betragen kann.

Die Menge an Wasser, die bei der Veresterung anwesend sein soll, beträgt im allgemeinen mindestens 2 Gew.-% bezogen auf das umzusetzende Polysaccharidderivat. Die obere Grenze wird durch die Löslichkeit des Polysaccharidcarboxylates angegeben. Diese ist vom Substitutionsgrad und der Art des Polysaccharids abhängig und kann leicht durch Vorversuche ermittelt werden. Im allgemeinen jedoch beträgt der Wassergehalt 2 bis 300 Gew.-%, vorzugsweise 3 bis 180 Gew.-%, besonders bevorzugt 7 bis 130 Gew.-%, ganz besonders bevorzugt 10 bis 100 Gew -%, bezogen auf das umzusetzende Polysaccharidderivat. Erstaunlicherweise tritt selbst in Anwesenheit dieser großen Wasseranteile unter den Reaktionsbedingungen keine Verseifung des Esters ein.

Die Aufarbeitung der erfindungsgemäß hergestellten Ester erfolgt in an sich üblicher Weise, vorzugsweise durch Abtrennen des überschüssigen Alkylierungs- und des Suspendiermittels und gegebenenfalls auch des entstandenen Alkalihalogenids durch Waschen mit z.B. Alkohol, bzw. wäßrigem Alkohol und durch Trocknen.

Das erfindungsgemäße Verfahren arbeitet besonders ökonomisch. Man kann nämlich die Alkalicarboxyalkylpolysaccharide unmittelbar nach der Herstellung, also in Gegenwart von Wasser und Natriumchlorid ohne vorherige Reinigung und Trocknung in die Ester überführen.

Ester von Carboxyalkylpolysacchariden sind interessante Ausgangsprodukte zur Herstellung von Klebstoffen, Verdickungsmitteln, Schutzkolloiden (DPS 957 938) und Ausgangsprodukte für trägerfixierte Arzneistoffe (US-PS 3 904 600).

## Beispiel 1

120 g (0,5 Mol) einer Natriumcarboxymethylcellulose mit einem DS von 1,0 und 8,3 % Feuchte wird in Chloroform suspendiert und 2 h mit 76 g (0,6 Mol) Dimethylsulfat unter Rückfluß gekocht. Nach Absaugen, mehrmaligem Waschen mit Chloroform und Trocknen an der Luft erhält man 142 g eines Cellulosederivates, das im IR-Spektrum Carboxylat-und Carbonesterbanden (1757 und 1635 $cm^{-1}$) aufweist und weder in Wasser noch in Natronlauge löslich ist. Der Veresterungsgrad beträgt 50 % (IR-Spektrum).

## Beispiel 2

120 g (0,5 Mol) einer Natriumcarboxymethylcellulose mit einem DS von 1,0 wird in 300 ml einer Mischung von 10 % Wasser und 90 % Isopropanol 2 h bei 25° und 2 h bei 70° mit 76 g (0,6 Mol) Dimethylsulfat umgesetzt. Dann wurde abgesaugt, mit Isopropanol gewaschen und bei 50° im Vakuum getrocknet. Man erhält 141 g eines wasserunlöslichen Celluloseesters, dessen IR-Spektrum neben einer starken Esterbande bei 1755 $cm^{-1}$ eine schwache Carboxylatbande bei 1635 $cm^{-1}$ aufweist. Die Veresterung ist danach zu 80 % erfolgt (IR-Spektrum).

Beispiele 3 bis 6

In einem 2 l-Autoklaven werden 265 g (1,0 Mol) eines handelsüblichen Carboxymethylcellulose-Natriumsalzes mit einem DS von 0,9 und einem Feuchtegehalt von 8,5 % bei 90° mit einem 1 l-molaren Überschuß von Chlormethan bei 20 bis 25 bar unter Zusatz von 18,5 Gew.-% $H_2O$ bezogen auf das Cellulosederivat (worin gegebenenfalls der Katalysator gelöst war) in An- oder Abwesenheit eines Katalysators verestert.

| | Kat. | mol Kat./mol Cell. | Zeit (h) | Verest.grad (%) |
|---|---|---|---|---|
| 3 | $NEt_4Cl$ | 0,36 | 7,5 | 78 |
| 4 | $NEt_4Cl$ | 0,36 | 14 | 90 |
| 5 | - | - | 4 | 34 |
| 6 | - | - | 7,5 | 60 |

Nach Beendigung der Reaktion wird überschüssiges Chlormethan abdestilliert und das Reaktionsprodukt bei 50° im Umlufttrockenschrank getrocknet. Der Veresterungsgrad wird durch argentometrische Chloridtitration bestimmt. Bei einem Veresterungsgrad z.B. von 90 % sind 90 % aller ursprünglich vorhandenen Carboxylatgruppen verestert worden.

Durch Waschen mit 70 %igem Methanol wird Natriumchlorid aus dem Cellulosederivat entfernt.

Beispiel 7

360 g (1,0 Mol) eines frisch hergestellten Carboxymethylcellulose-Natriumsalzes mit einem DS von 1,72 und einem Feuchtegehalt von 12,2 % werden wie in Beispiel 3 umgesetzt. Der Veresterungsgrad beträgt 90 %.

Beispiel 8

Bei der Wiederholung von Beispiel 3 ohne Wasserzusatz mit der dort eingesetzten, aber scharf getrockneten Natriumcarboxymethylcellulose, die nur noch 3,0 % Feuchte enthält, erhält man einen Veresterungsgrad von 20 %.

**Ansprüche**

1. Verfahren zur Herstellung von Estern III der Carboxyalkylpolysaccharide durch Umsetzung von Alkalisalzen I der Carboxyalkylpolysaccharide mit einem Alkylierungsmittel II, dadurch gekennzeichnet, daß die Umsetzung durchgeführt wird in heterogener Phase in einem Suspendiermittel in Gegenwart von Wasser aber in Abwesenheit einer starken Säure bzw. starken Base wobei als Alkylierungsmittel II eine Verbindung der Formel

RX (II)

verwendet wird, worin bedeuten

X ein Rest der ein Anion bildet,

R ein Alkyl- oder Aralkylrest.

2. Verfahren nach Anspruch 1, dadurch gekennzeichnet, daß das Alkalisalz I Einheiten folgender Formel aufweist

$Sacch.\{O-(CH_2)_n-COOM]_m$ I

worin bedeuten

M Alkalikation insbesondere Natrium

n 1 oder 2

m 0,2 bis 3

Sacch-O- Saccharideinheit eines Polysaccharides.

3. Verfahren nach wenigstens einem der vorhergehenden Ansprüche, dadurch gekennzeichnet, daß der Ester III folgender Formel entspricht

$$\mathrm{Sacch.}\begin{cases}[O-(CH_2)_n-COOM]_p \\ [O-(CH_2)_n-COOR]_{m-p}\end{cases} \qquad III$$

worin

Sacch. -O-, M, R, n und m die obengenannte Bedeutungen haben und worin

p = 0 bis 2,8 beträgt, wobei

m-p wenigstens 0,1 ist.

4. Verfahren nach wenigstens einem der vorhergehenden Ansprüche, dadurch gekennzeichnet, daß die Umsetzung in Gegenwart eines Katalysators durchgeführt wird.

5. Verfahren nach wenigstens einem der vorhergehenden Ansprüche, dadurch gekennzeichnet, daß das Alkalisalz I ein Cellulosestärke- oder Dextrinderivat ist.

6. Verfahren nach wenigstens einem der vorhergehenden Ansprüche, dadurch gekennzeichnet, daß das Alkylierungsmittel II Dimethylsulfat oder Methylchlorid ist.

7. Verfahren nach wenigstens einem der vorhergehenden Ansprüche, dadurch gekennzeichnet, daß das Suspendiermittel ein Kohlenwasserstoff, Halogenkohlenwasserstoff, Alkohol oder Alkylierungsmittel II ist.